# FASCICULE DE BREVET EUROPEEN

(11) **EP 2 090 546 B1**
(45) Date de publication et mention de la délivrance du brevet: **13.04.2011**
(21) Numéro de dépôt: 09305135.7
(22) Date de dépôt: 13.02.2009
(51) Int. Cl.: C02F 1/28, C02F 1/78, B01D 24/14, C02F 103/42

(54) **Dispositif de traitement d'eau pour piscine par l'ozone**
Vorrichtung zur Wasseraufbereitung für Schwimmbäder mit Hilfe von Ozon
Device for treating swimming pool water using ozone

(30) Priorité: 14.02.2008 FR 0800816
(43) Date de publication de la demande: 19.08.2009
(73) Titulaire: Prominent France, 67201 Eckbolsheim (FR)
(72) Inventeur: Jund, René, 67330 Ernolsheim-les-Saverne (FR)
(74) Mandataire: Littolff, Denis

(56) Documents cités:
- WO-A-94/03401
- DE-A1- 4 445 689
- DE-B- 1 256 164
- FR-A- 2 011 356
- FR-A- 2 228 725
- US-A1- 2004 195 162

## Description

La présente invention concerne un dispositif de traitement d'eau par l'ozone, ainsi qu'un système plus général à circuit de traitement d'eau en continu pour piscine basé sur un tel dispositif.

Bien qu'il ne s'agisse évidemment pas de l'unique application possible, la suite de la description s'appuiera à titre préférentiel sur l'exemple des piscines qui illustre bien les problématiques rencontrées dans le traitement des eaux par l'ozone. L'ozone est connu comme un excellent désinfectant, utilisé notamment comme une alternative ou un complément technique aux désinfections conventionnelles au chlore ou produits chlorés. L'ozone a en effet un champ d'action microbiocide exceptionnellement étendu, ce qui lui permet d'agir rapidement et efficacement contre quasiment toutes les bactéries, virus et autres microorganismes connus.

Il représente par conséquent une solution de désinfection de l'eau très efficace, de surcroît écologique, avantage supplémentaire indéniable à l'aube du troisième millénaire. Son inconvénient majeur est qu'il se présente sous forme gazeuse. Son effet floculant peut être également vu comme un avantage dans le domaine du traitement de l'eau, mais n'est pas nécessairement recherché au stade d'intervention de l'ozone dans le circuit de traitement des piscines, car la floculation produite peut compliquer le traitement à l'ozone.

Pour compléter la présentation du contexte d'application de l'ozone comme désinfectant dans le traitement des eaux pour piscines, il est à noter que la réglementation en impose la disparition totale dans le bassin de natation, afin que les nageurs n'en respirent pas d'éventuels dégazages lorsqu'ils se baignent.

Les solutions techniques basées sur une désinfection par l'ozone telle qu'employée jusqu'à présent utilisent trois cuves successives disposées entre le bac tampon placé en sortie de la piscine et les conduits permettant sa réalimentation en eau purifiée. Une première cuve, disposée immédiatement en sortie du bac tampon, constitue un filtre à sable destiné à filtrer les particules et saletés afin d'éviter que, dans la deuxième cuve dite de contact en principe seulement prévue pour réaliser le mélange d'eau et d'air ozoné sous pression, se produise une floculation due à l'effet floculant de l'ozone, qui serait indésirable à ce stade du traitement.

Enfin, une troisième cuve effectue exclusivement la neutralisation de l'ozone, traditionnellement à l'aide d'un filtre à charbon actif. L'eau traitée obtenue en sortie de cette troisième cuve est alors débarrassée de toute trace d'ozone, de toute particule ou saleté et elle est parfaitement désinfectée, donc utilisable pour réalimenter la piscine.

Cette solution est techniquement satisfaisante, mais elle présente un certain nombre d'inconvénients. En premier lieu, la multiplication des équipements (3 cuves) conduit à occuper une surface au sol relativement importante. Les locaux qui accueillent ces équipements doivent dès lors présenter des dimensions non négligeables, ce qui n'est pas dépourvu d'incidences économiques.

Le coût d'une telle installation est en effet sensiblement plus élevé non seulement du fait de la multiplication des équipements impliqués dans le traitement, mais également parce qu'un supplément de surface au sol représente un coût dont l'importance relative croît régulièrement à la mesure de celle de l'immobilier dans le monde économique actuel.

Pour remédier à ces inconvénients, le document FR 2 011 356 présente une solution technique comportant une seule cuve fermée à l'intérieur de laquelle plusieurs couches se succèdent. Ce dispositif de traitement d'eau par l'ozone est beaucoup moins gourmand en surface au sol et diminue sensiblement le nombre d'équipements nécessaires audit traitement.

Plus précisément, cette cuve fermée comporte une arrivée d'eau mélangée à de l'air ozoné au travers d'un conduit atteignant la partie supérieure de la cuve où se trouve une couche d'eau. L'eau ozonée s'associe à la couche d'eau existante, et redescend par une couche de filtrage, puis une couche porteuse, et enfin au travers d'un fond perméable avant d'être évacuée par une sortie d'eau au fond de la cuve.

L'un des inconvénients d'un tel dispositif de traitement est la répartition inégale de l'eau ozonée dans la cuve en sortie du conduit, empêchant un filtrage optimal.

Enfin, l'ozone étant extrêmement oxydant, la cuve dans laquelle s'effectue le mélange eau / air ozoné sous pression doit présenter à un haut degré des caractéristiques d'anticorrosion. A cet égard, les différentes techniques utilisées jusqu'ici sont plus ou moins fiables, allant de la cuve en acier standard revêtu d'une couche de résine époxy à une cuve en fibres de verre basées sur des résines spéciales supposées avoir une excellente tenue à la corrosion.

L'invention remédie aux inconvénients et insuffisances relevées ci-dessus en proposant un dispositif de traitement d'eau par l'ozone doté d'un système de filtrage optimal et d'une solution économiquement favorable contre la corrosion. D'autres avantages apparaîtront encore à la lecture de ce document.

En pratique, le dispositif de traitement d'eau de l'invention, constitué classiquement d'une cuve fermée comportant :
- une arrivée d'eau mélangée à de l'air ozoné ;
- une sortie d'eau traitée débarrassée d'ozone ;
- une soupape de dégazage ;
- un filtre à charbon actif ; et
- un orifice de vidange,
se caractérise à titre principal en ce que :
- l'arrivée d'eau débouche en partie basse de la cuve dans un premier volume d'eau délimité par une cloison supérieure séparatrice supportant le charbon actif ;
- au moins un conduit d'allure verticale franchit la cloison et le filtre à charbon actif, véhiculant le mélange d'eau et d'air ozoné du premier volume vers un système diffuseur situé dans un second volume d'eau surmontant le charbon actif ;
- un dispositif collecteur de l'eau relié à la sortie d'eau est disposé dans le charbon actif au voisinage de la cloison séparatrice.

Dans le dispositif de l'invention, l'existence du conduit reliant les deux volumes d'eau, faisant office de puits vertical à section nécessairement limitée, assure une compression du mélange qui est strictement confinée et permet d'optimiser le contact eau / air ozoné. Le système diffuseur disposé en partie supérieure joue par ailleurs le rôle de mélangeur statique, et redistribue spatialement dans la cuve le mélange eau / air ozoné par rapport au filtre à charbon actif.

A cet effet, le système diffuseur s'étend radialement par rapport à la cuve, de manière à distribuer l'eau mélangée à de l'air ozoné dans les dimensions transversales de la cuve, au dessus du filtre à charbon actif.

Pour répondre à cette distribution optimisée du mélange par rapport au filtre à charbon actif, il est alors souhaitable de mettre en place en aval du filtre un dispositif collecteur des eaux traitées, en l'espèce débarrassées de leur ozone, qui couvre lui aussi une surface tirant au mieux partie de la configuration du filtre à charbon actif dans la cuve.

A cet effet, selon l'invention, le dispositif collecteur est disposé parallèlement à la cloison séparatrice, et s'étend sur la quasi totalité de la surface de cette dernière.

Il peut également s'agir d'une seconde cloison, disposée parallèlement à la cloison séparatrice et équipée de buselures qui laissent passer l'eau et retiennent le charbon actif. L'eau filtrée s'écoule alors entre les deux parois vers l'orifice de vidange.

La fonction principale du ou des conduits d'allure verticale est la mise en contact optimisée de l'eau avec l'air ozoné.

C'est la raison pour laquelle, selon l'invention, le ou les conduits d'allure verticale véhiculant l'eau mélangée à l'air ozoné vers le second volume comporte(nt) une section permettant une compression de ladite eau mélangée, sans que les pertes de charges occasionnées soient rédhibitoires. Cette section est calculée de telle sorte qu'un flux continu de liquide puisse être filtré, à un débit compatible avec les exigences du circuit hydraulique dans lequel le dispositif de l'invention est implanté, tout en assurant une compression suffisante pour améliorer sensiblement la mise en contact du gaz et du liquide.

Selon une possibilité, le dispositif de l'invention ne comporte qu'un conduit central.

L'ozone étant un gaz très oxydant, se pose inévitablement le problème de la protection de la cuve elle-même, qui doit offrir une tenue dans le temps compatible avec les contraintes économiques et fonctionnelles des installations dans lesquelles le dispositif de l'invention est utilisé. En particulier, il est connu que l'effet d'oxydation maximum se situe au niveau haut de la cuve, au niveau du dioptre de séparation du liquide et de l'air.

Il a donc été prévu, selon l'invention, que la cuve soit constituée d'un corps fermé en partie supérieure par une rehausse comportant la soupape de dégazage.

Plus précisément, cette rehausse est réalisée en matériau synthétique, par exemple de type PVC ou PVDF, c'est-à-dire un matériau inoxydable.

Le corps de cuve peut alors simplement être réalisé en acier, avec une protection cathodique contre l'oxydation.

En d'autres termes, dans la zone d'oxydation maximale, l'élément de fermeture (la rehausse) est prévu d'emblée en matériau inoxydable, alors que le reste de la cuve est fabriqué en acier simple avec une solution cathodique de protection. Cette solution est économiquement favorable, le coût d'un acier simple étant largement inférieur à celui d'un acier inox qui peut de plus nécessiter un revêtement intérieur anticorrosion complémentaire.

Alternativement, le corps de la cuve peut aussi être réalisé en matériau synthétique du type PVC fretté ou PVDF renforcé.

Dans l'hypothèse de l'utilisation d'un dispositif tel que décrit auparavant pour la désinfection des eaux de piscines, ledit dispositif est disposé d'une part en aval d'une cuve formant filtre à sable placée en sortie d'un bac tampon, et d'autre part directement en amont de la piscine, la sortie d'eau en fin de traitement étant alors reliée au bassin par des conduits. La cuve réalisant le filtrage à sable garantit l'utilisation, pendant le processus d'ozonation, d'une eau dépourvue de particules et de saletés, évitant l'apparition d'une floculation naturellement induite par l'ozone. Une telle floculation gêne le filtrage par charbon actif, et/ou entraîne à tout le moins la nécessité d'un lavage plus fréquent dudit filtre.

Il est d'ailleurs à noter que le dispositif de l'invention favorise le lavage et le détassage du charbon actif, la configuration employée dans le cadre de l'invention permettant d'utiliser la sortie d'eau comme une entrée pour de l'eau de lavage du charbon actif.

L'invention va à présent être décrite plus en détail, en référence aux figures, pour lesquelles :
- la figure 1 est une vue en coupe d'un dispositif de traitement de l'eau par l'ozone selon l'invention ;
- la figure 2 représente, en coupe identique à celle de la figure 1, une variante comportant une cloison supplémentaire à titre de dispositif collecteur d'eau ; et
- la figure 3 est une représentation schématique d'un système de traitement de l'eau d'une piscine à l'aide d'un dispositif selon la figure 1.

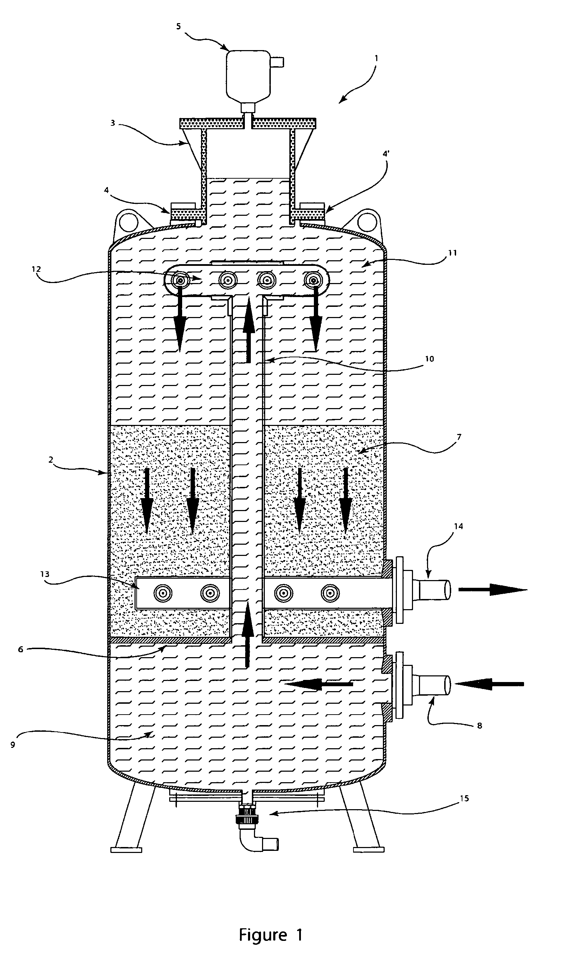

En référence à la figure 1, la cuve (1) se compose d'un corps (2) fermé, à sa partie supérieure, par une rehausse (3) fixée au corps (2) par exemple à l'aide de brides (4, 4'), et dans laquelle est prévue une soupape de dégazage (5).

L'intérieur de la cuve est équipé d'une paroi de séparation (6) servant de support à du charbon actif (7) dont l'empilement constitue un filtre. Un mélange d'eau et d'air ozoné arrive dans la partie basse de la cuve (1 ) via un orifice d'arrivée d'eau (8). Un premier volume (9) est donc constitué en partie basse de la cuve (1), sous la cloison de séparation (6). Un conduit ou puits central (10) véhicule le liquide, c'est-à-dire l'eau additionnée d'air ozoné, vers le haut de la cuve (1), et plus précisément vers un second volume (11) surmontant le filtre à charbon actif (7). La fonction du puits ou conduit central (10) est de comprimer le mélange eau + air ozoné de manière à réaliser une mise en contact optimale du liquide et du gaz. Un système diffuseur (12) disposé à l'extrémité supérieure du conduit (10) permet ensuite de redistribuer dans le volume de la cuve (1) et de rediriger le liquide additionné du gaz en direction du charbon actif (7).

Alors que le conduit (10) se développe selon l'axe de la cuve (1), le système diffuseur (12) est par conséquent orienté perpendiculairement au conduit (10), se développant radialement dans les dimensions transversales de la cuve afin de mieux répartir le liquide contenant l'air ozoné par rapport au filtre à charbon actif (7). Le mélange de liquide et de gaz arrivant via l'orifice d'entrée (8) se déplace dans la direction des flèches apparaissant en figure 1. Ainsi, l'eau additionnée d'air ozoné est filtrée par le charbon actif (7) puis, à proximité de la cloison (6), atteint un dispositif collecteur (13) situé au niveau d'un orifice de sortie (14) et permettant de collecter l'eau purifiée par le filtre, c'est-à-dire débarrassée de l'ozone. L'eau obtenue en sortie (14) est alors désinfectée, prête à être réutilisée, par exemple renvoyée vers une piscine.

Comme mentionné auparavant, le corps de la cuve (1 ) peut être prévu en acier simple, à condition qu'y soit adjoint un dispositif de protection cathodique. Alternativement, il peut bien entendu être possible de prévoir la cuve soit en acier inoxydable, soit en un matériau de type fibre de verre muni de résines spéciales supposées résister à l'ozone, par exemple du polyéthylène traité, etc. La partie supérieure de fermeture, c'est-à-dire la rehausse (3) dotée de sa soupape de dégazage (5) air / ozone est réalisée de préférence en polyéthylène. Alternativement, d'autres matériaux inoxydables peuvent également être employés, comme du PVDF ou de l'inox.

Le dispositif diffuseur (12) ainsi que le conduit sont de préférence réalisés en polyéthylène. Il est à noter que les dimensions du puits central (10) doivent garantir une compression dans le tube vertical, forçant le contact entre l'eau et le gaz, sans pour autant que les pertes de charge soient trop importantes. Le calcul de la section du conduit (10) est prévu en conséquence.

Un orifice et un conduit de vidange (15) sont prévus au bas de la cuve (1). Il est à noter que cette configuration est extrêmement favorable également pour la maintenance et la pérennité du système, puisque l'orifice et le conduit de sortie (14) peuvent être utilisés, avec un flux de liquide inverse, pour détasser, voire pour laver le charbon actif (7) du filtre.

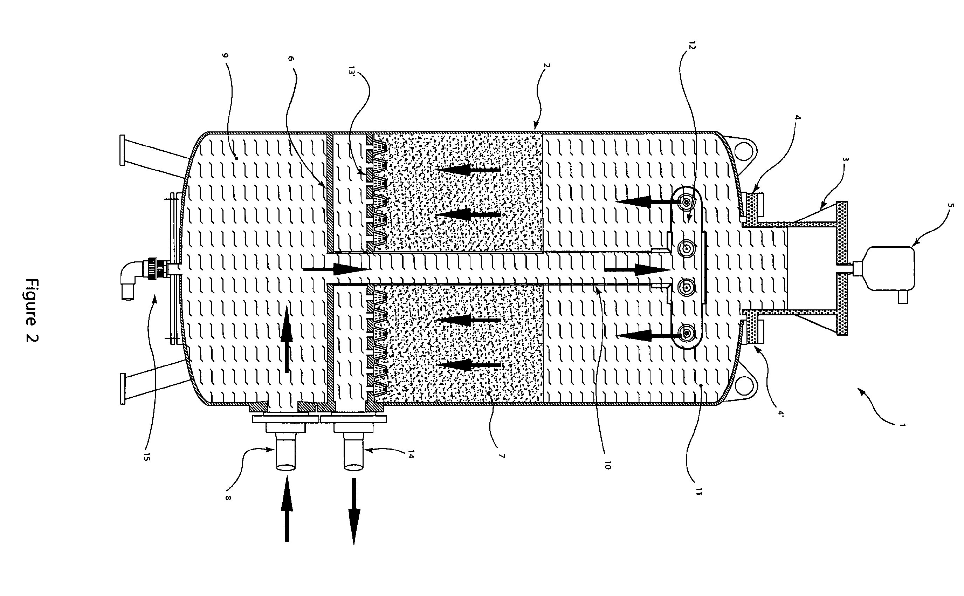

La configuration de la figure 2 se distingue de la précédente en ce que le dispositif collecteur d'eau est en l'espèce constitué d'une cloison supplémentaire (13') munie de buselures et qui laisse subsister, entre les deux cloisons (6) et (13'), un volume d'évacuation d'eau filtrée vers l'orifice de sortie (14). Seule l'eau peut franchir cette cloison supplémentaire (13'), le charbon actif étant retenu au-dessus.

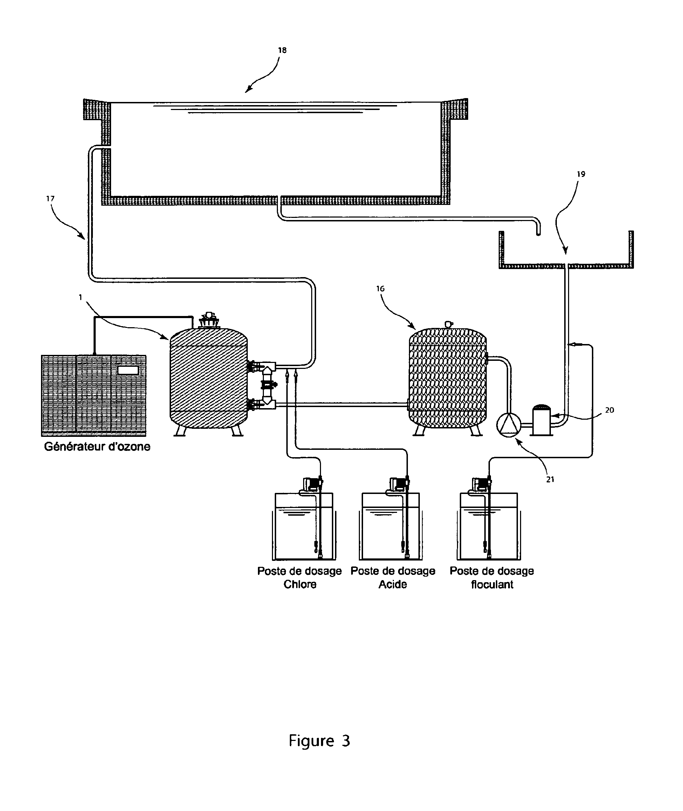

En référence à la figure 3, la cuve (1) de l'invention est disposée en aval d'une cuve (16) constituant un filtre à sable. En sortie du dispositif (1) de l'invention, des tuyauteries ou conduits (17) renvoient l'eau purifiée à destination d'une piscine (18). Le circuit de désinfection de l'eau de la piscine (18) se compose par ailleurs classiquement d'un bac tampon (19), d'un pré-filtre (20), d'une pompe (21) et de différents dispositifs de mesure (mesure du pH, du chlore, du potentiel redox, etc.).

## Revendications

1. Dispositif de traitement d'eau par l'ozone, constitué d'une cuve (1) fermée comportant :
- une arrivée (8) d'eau mélangée à de l'air ozoné ;
- une sortie (14) d'eau traitée débarrassée d'ozone ;
- une soupape de dégazage (5) ;
- un filtre à charbon actif (7) ; et
- un orifice de vidange (15),
**caractérisé en ce que** :
- l'arrivée d'eau débouche en partie basse de la cuve (1) dans un premier volume (9) d'eau délimité par une cloison supérieure (6) séparatrice supportant le charbon actif ;
- au moins un conduit (10) d'allure verticale franchit la cloison (6) et le filtre à charbon actif (7), véhiculant le mélange d'eau et d'air ozoné du premier volume (9) vers un système diffuseur (12) situé dans un second volume (11) d'eau surmontant le charbon actif ;
- un dispositif collecteur (13) de l'eau relié à la sortie (14) d'eau est disposé dans le charbon actif au voisinage de la cloison séparatrice (6).

2. Dispositif de traitement d'eau selon la revendication précédente, **caractérisé en ce que** le système diffuseur (12) s'étend radialement par rapport à la cuve (1), de manière à distribuer l'eau mélangée à de l'air ozoné dans les dimensions transversales de la cuve (1) au dessus du filtre à charbon actif (7).

3. Dispositif de traitement d'eau selon l'une des revendications précédentes, **caractérisé en ce que** le dispositif collecteur (13) est disposé parallèlement à la cloison séparatrice (6), et s'étend sur la quasi totalité de la surface de cette dernière.

4. Dispositif de traitement d'eau selon l'une des revendications 1 et 2, **caractérisé en ce que** le dispositif collecteur (13) est constitué d'une seconde cloison (13'), disposée parallèlement à la cloison séparatrice (6) et équipée de buselures.

5. Dispositif de traitement d'eau selon l'une quelconque des revendications précédentes, **caractérisé en ce que** le ou les conduits (10) d'allure verticale véhiculant l'eau mélangée à l'air ozoné vers le second volume (11) comportent une section permettant une compression de ladite eau mélangée.

6. Dispositif de traitement d'eau selon l'une quelconque des revendications précédentes, **caractérisé en ce qu'**il ne comporte qu'un conduit central (10).

7. Dispositif de traitement d'eau selon l'une quelconque des revendications précédentes, **caractérisé en ce que** la cuve (1) fermée comprend un corps (2) fermé en partie supérieure par une rehausse (3) comportant la soupape de dégazage (5).

8. Dispositif de traitement d'eau selon la revendication précédente, **caractérisé en ce que** la rehausse (3) est réalisée en matériau synthétique, par exemple de type PE ou PVDF.

9. Dispositif de traitement d'eau selon l'une des revendications 6 et 7, **caractérisé en ce que** le corps (2) de cuve (1) est réalisé en acier avec une protection cathodique contre l'oxydation.

10. Dispositif de traitement d'eau selon l'une des revendications 7 et 8, **caractérisé en ce que** le corps (2) de cuve (1) est réalisé en matériau synthétique du type PVC fretté ou PVDF renforcé.

11. Système de traitement d'eau pour piscine (18), comportant un dispositif selon les revendications 1 à 10, **caractérisé en ce que** ledit dispositif est disposé en aval d'une cuve (16) formant filtre à sable placé en sortie d'un bac tampon (19), et directement en amont de la piscine (18), la sortie d'eau en fin de traitement étant reliée au bassin par des conduits (17).

## Claims

1. A device for treating water with ozone, consisting of a closed tank (1) including:
- a supply (8) of water mixed with ozonized air;
- an outlet (14) for treated water cleared of ozone;
- a degassing valve (5);
- an active coal filter (7); and
- a discharge orifice (15),
**characterized in that**:
- the water supply opens out in the low portion of the tank (1) in a first volume (9) of water delimited by an upper separating partition (6) supporting the active coal;
- at least one conduit (10) of vertical aspect, crosses the partition (6) and the active coal filter (7), conveying the mixture of water and ozonized air from the first volume (9) to a diffusing system (12) located in a second volume (11) of water surmounting the active coal;
- a water collecting device (13) connected to the water outlet (14) is arranged in the active coal in the vicinity of the separating partition (6).

2. The water treatment device according to the preceding claim, **characterized in that** the diffusing system (12) extends radially with respect to the tank (1), so as to distribute the water mixed with ozonized air in the transverse dimensions of the tank (1) above the active coal filter (7).

3. The water treatment device according to any of the preceding claims, **characterized in that** the collecting device (13) is arranged parallel to the separating partition (6), and extends over quasi the totality of the surface of the latter.

4. The water treatment device according to any of claims 1 and 2, **characterized in that** the collecting device (13) consists of a second partition (13'), arranged parallel to the separating partition (6) and equipped with nozzles.

5. The water treatment device according to any of the preceding claims, **characterized in that** the conduit(s) (10) of vertical aspect conveying the water mixed with ozonized air towards the second volume (11), include(s) a section allowing compression of said mixed water.

6. The water treatment device according to any of the preceding claims, **characterized in that** it only includes a central conduit (10).

7. The water treatment device according to any of the preceding claims, **characterized in that** the closed tank (1) comprises a body (2) closed in the upper portion by a heightener (3) including the degassing valve (5).

8. The water treatment device according to the preceding claim, **characterized in that** the heightener (3) is made in a synthetic material, for example of the PE or PVDF type.

9. The water treatment device according to any of claims 6 and 7, **characterized in that** the body (2) of the tank (1) is made in steel with cathodic protection against oxidation.

10. The water treatment device according to any of claims 7 and 8, **characterized in that** the body (2) of the tank (1) is made in a synthetic material of the ring-strengthened PVC or reinforced PVDF type.

11. A system for treating swimming pool (18) water, including a device according to claims 1 to 10, **characterized in that** said device is arranged downstream from a tank (16), forming a sand filter placed at the outlet of a buffer container (19), and directly upstream from the swimming pool (18), the water outlet at the end of the treatment being connected to the pool through conduits (17).

## Patentansprüche

1. Vorrichtung zur Wasseraufbereitung mit Hilfe von Ozon, die von einem geschlossenen Behälter (1) gebildet wird, der umfasst,
- einen Eingang (8) für mit ozonierter Luft gemischtes Wasser,
- einen Ausgang (14) für gereinigtes, vom Ozon befreites Wasser,
- ein Entlüftungsventil (5),
- einen Aktivkohlefilter (7) und
- eine Ablassöffnung (15),
**dadurch gekennzeichnet, dass**:
- der Wassereingang im unteren Abschnitt des Behälters (1) in ein erstes Wasservolumen (9) mündet, das von einer oberen trennenden Scheidewand (6) begrenzt wird, die die Aktivkohle trägt,
- mindestens eine vertikal verlaufende Leitung (10) die Scheidewand (6) und den Aktivkohlefilter (7) überwindet, indem sie das Gemisch aus Wasser und ozonierter Luft aus dem ersten Volumen (9) in ein Diffusionssystem (12) befördert, das sich in einem zweiten Wasservolumen (11) über der Aktivkohle befindet,
- eine mit dem Wasserausgang (14) verbundene Wasser-Sammelvorrichtung (13) in der Aktivkohle in der Nähe der trennenden Scheidewand (6) angeordnet ist.

2. Vorrichtung zur Wasseraufbereitung nach vorangehendem Anspruch, **dadurch gekennzeichnet, dass** sich das Diffusionssystem (12) radial im Verhältnis zum Behälter (1) derart erstreckt, dass das mit der ozonierten Luft gemischte Wasser in den transversalen Dimensionen des Behälters (1) oberhalb des Aktivkohlefilters (7) verteilt wird.

3. Vorrichtung zur Wasseraufbereitung nach einem der vorangehenden Ansprüche, **dadurch gekennzeichnet, dass** die Sammelvorrichtung (13) parallel zur trennenden Scheidewand (6) angeordnet ist und sich quasi über die gesamte Fläche dieser Letztgenannten erstreckt.

4. Vorrichtung zur Wasseraufbereitung nach einem der Ansprüche 1 und 2, **dadurch gekennzeichnet, dass** die Sammelvorrichtung (13) von einer zweiten Scheidewand (13') gebildet wird, die parallel zur trennenden Scheidewand (6) angeordnet und mit kleinen Düsen ausgestattet ist.

5. Vorrichtung zur Wasseraufbereitung nach einem der vorangehenden Ansprüche, **dadurch gekennzeichnet, dass** die vertikal verlaufende/n Leitung/en (10), die das mit der ozonierten Luft gemischte Wasser in das zweite Volumen (11) befördern, einen Abschnitt aufweisen, der eine Verdichtung des gemischten Wassers erlaubt.

6. Vorrichtung zur Wasseraufbereitung nach einem der vorangehenden Ansprüche, **dadurch gekennzeichnet, dass** sie nur eine zentrale Leitung (10) umfasst.

7. Vorrichtung zur Wasseraufbereitung nach einem der vorangehenden Ansprüche, **dadurch gekennzeichnet, dass** der geschlossene Behälter (1) einen Körper (2) umfasst, der im oberen Abschnitt von einem Aufsatz (3) verschlossen ist, der das Entlüftungsventil (5) umfasst.

8. Vorrichtung zur Wasseraufbereitung nach vorangehendem Anspruch, **dadurch gekennzeichnet, dass** der Aufsatz (3) aus einem Kunststoff gefertigt ist, zum Beispiel vom Typ PE oder PVDF.

9. Vorrichtung zur Wasseraufbereitung nach einem der Ansprüche 6 und 7, **dadurch gekennzeichnet, dass** der Körper (2) des Behälters (1) aus Stahl mit einem Kathodenschutz gegen Oxidation gefertigt ist.

10. Vorrichtung zur Wasseraufbereitung nach einem der Ansprüche 7 und 8, **dadurch gekennzeichnet, dass** der Körper (2) des Behälters (1) aus Kunststoff vom Typ geschrumpftes PVC oder verstärktes PVDF gefertigt ist.

11. System zur Wasseraufbereitung für Schwimmbäder (18), die eine Vorrichtung nach den Ansprüchen 1 bis 10 aufweist, **dadurch gekennzeichnet, dass** die Vorrichtung nach einem Behälter (16) angeordnet ist, der einen Sandfilter bildet, der am Ausgang eines Pufferbottichs (19) platziert ist und direkt vor dem Schwimmbad (18), wobei der Wasserausgang am Ende der Aufbereitung mit dem Becken durch Leitungen (17) verbunden ist.
